# EUROPÄISCHE PATENTSCHRIFT

(11) **EP 1 763 463 B1**
(45) Veröffentlichungstag und Bekanntmachung des Hinweises auf die Patenterteilung: **21.10.2009**
(21) Anmeldenummer: 05735717.0
(22) Anmeldetag: 14.04.2005
(51) Int. Cl.: B60T 7/22, F16H 61/21

(54) **VERFAHREN UND VORRICHTUNG ZUR VERZÖGERUNG EINES KRAFTFAHRZEUGS**
METHOD AND DEVICE FOR SLOWING DOWN A MOTOR VEHICLE
PROCEDE ET DISPOSITIF POUR DECELERER UNE AUTOMOBILE

(30) Priorität: 29.06.2004 DE 102004031305
(43) Veröffentlichungstag der Anmeldung: 21.03.2007
(73) Patentinhaber: ROBERT BOSCH GMBH, 70442 Stuttgart (DE)
(72) Erfinder: MEISSNER, Manfred, 71665 Vaihingen/Enz (DE); LUCAS, Bernhard, 74354 Besigheim (DE); SCHAEFER, Bernd-Josef, 72124 Pliezhausen (DE); SCHICK, Jens, 71083 Herrenberg (DE); URBAN, Elke, 74321 Bietigheim-Bissingen (DE); KROPF, Thomas, 72770 Reutlingen (DE)
(86) Internationale Anmeldenummer: PCT/EP2005/051647
(87) Internationale Veröffentlichungsnummer: WO 2006/000481

(56) Entgegenhaltungen:
- WO-A-00/56578
- WO-A-20/05005206
- DE-A1- 10 118 707
- DE-A1- 10 231 558
- DE-A1- 19 546 652
- DE-A1- 19 639 907
- PATENT ABSTRACTS OF JAPAN Bd. 1998, Nr. 09, 31. Juli 1998 (1998-07-31) & JP 10 103498 A (JATCO CORP), 21. April 1998 (1998-04-21)

## Beschreibung

Die vorliegende Erfindung betrifft ein Verfahren und eine Vorrichtung zur Verzögerung eines Kraftfahrzeugs, das mittels einer Objektsensorik im Umfeld des Fahrzeugs befindliche Objekte selektiert und bei Erkennen einer unausweichbaren Kollisionssituation mit einem der erkannten Objekte eine Notbremsung zur Kollisionsverhinderung bzw. Kollisionsstärkenverminderung auslöst. Hierzu wird das Getriebe zur Beginn der Notbremsung in eine Schaltstellung gebracht, in der der Antriebsstrang eine wesentliche Verzögerungswirkung aufweist. Die Vorrichtung weist hierzu eine Objektsensorik auf, mit der im Umfeld des Fahrzeugs befindliche Objekte detektierbar sind und bei Erkennen einer unausweichbaren Kollisionssituation mit einem der erkannten Objekte eine Notbremsung zur Kollisionsverhinderung bzw. Kollisionsstärkenverminderung auslösbar ist.

### Stand der Technik

Aus der DE 102 31 558 A1 ist ein Verfahren und eine Vorrichtung zum automatischen Auslösen einer Verzögerung eines Fahrzeugs zur Verhinderung einer Kollision mit einem weiteren Objekt oder Verminderung der Folgen einer bevorstehenden Kollision mit einem weiteren Objekt, bekannt, wobei mittels Signalen einer Einrichtung zum Aussenden und Empfangen von Radar- oder Lidarsignalen oder einer Einrichtung zum Empfangen von Videosignalen Objekte im Kursbereich des Fahrzeugs detektiert werden, in Abhängigkeit der erkannten Objekte ein Gefährdungspotenzial bestimmt wird und in Abhängigkeit des Gefährdungspotenzials die Verzögerungsmittel in mindestens drei Zuständen ansteuert, von dem mindestens ein Zustand die Verzögerungsmittel des Fahrzeugs in einen bremsvorbereitenden Zustand versetzt. Weiterhin können in Abhängigkeit des Gefährdungspotenzials weitere Fahrzeugfunktionen ausgeführt werden, wodurch die Insassensicherheit in dieser Fahrsituation erhöht wird.

Aus der DE 195 46 652 A1 ist ein Verfahren zur Reduzierung oder Fahrgeschwindigkeit eines Kraftfahrzeuges, das ein Kollisionsvermeidungssystem aufweist, bekannt, durch das der Abstand zu einem vorausfahrenden Fahrzeug laufend erfaßt und bei Unterschreiten eines vorgegebenen, geschwindigkeitsabhängigen Mindestabstandes eine Einrichtung zur zwangsweisen Abbremsung angesteuert wird, wobei der Antrieb des Fahrzeugs durch eine Mehrzylinder-Kolbenbrennkraftmaschine mit variabel steuerbaren Ventiltrietien erfolgt und wobei bei Unterschreiten des vorgegebenen Mindestabstandes der Ventiltrieb mindestens eines Zylinders der Kolbenbrennkraftmaschine auf Kompressorbetrieb umgesteuert wird.

Aus der WO 2005/005206 A1 ist ein Kollisionssicherheitssystem für Fahrzeuge bekannt, das Aktoreinrichtungen im eigenen Fahrzeug , wie Fahrzeugverzögerungseinrichtungen oder Insassenschutzsysteme, auf Basis von Informationen mindestens eines unmittelbar vorherfahrenden Fahrzeugs, steuert. Das Fahrzeugsteuerungssystem ist ausgebildet, eine abstandsabhängige Steuerung der Aktoreinrichtungen durchzuführen, die auf Grundlage der Abstandsinformation zu dem mindestens einen vorherfahrenden Fahrzeug getroffen wird.

### Kern und Vorteile der Erfindung

Der Kern der vorliegenden Erfindung ist es, ein Verfahren und eine Vorrichtung anzugeben, mittels denen bei einer bevorstehenden, unausweichbaren Kollision des eigenen Fahrzeugs mit einem weiteren Fahrzeug eine Notbremsung zur Kollisionsverhinderung bzw. Kollisionsstärkenmindetung ausgelöst wird, wobei die Verzögerung möglichst schnell und in einem möglichst starken Ausmaß aufgebaut werden soll.

Erfindungsgemäß wird dieses durch die Merkmale der unabhängigen Ansprüche gelöst. Vorteilhafte Weiterbildungen und Ausgestaltungen ergeben sich aus den Unteranspruchen.

Vorteilhafterweise verbleibt das Getriebe solange in der Schaltstellung mit wesentlicher Verzögerungswirkung, bis ein maximaler Bremsdruck an den Bremseinrichtungen aufgebaut ist und das Getriebe dann in eine neutrale Stellung geschaltet wird.

Weiterhin ist es vorteilhaft, dass die Schaltstellung, in der der Antriebsstrang eine wesentliche Verzögerung aufweist, der niedrigste Vorwärtsgang ist. Hierbei wird die Verzögerung durch den Antriebsstrang bewirkt, indem ein Verzögerungsmoment vom Getriebe aufgebracht wird oder indem ein Verzögerungsmoment vom Motor aufgebracht wird und durch das Getriebe übersetzt wird.

Weiterhin ist es vorteilhaft, dass die Schaltstellung, in der der Antriebsstrang eine wesentliche Verzögerung aufweist, der Rückwärtsgang ist.

Weiterhin ist es vorteilhafte, dass die Schaltstellung, in der der Antriebsstrang eine wesentliche Verzögerung aufweist, eine Blockierstellung des Getriebes ist. Diese Blockierstellung des Getriebes kann vorleilhaflerweise durch eine Ansteuerung mindestens einer internen Reibkupplung an mindestens einem Planetenradsatz eingestellt werden.

Weiterhin ist es vorteilhaft, dass zusätzlich zur Verzögerung des Antriebsstranges die Fahrzeugbremsen aktiviert werden.

Weiterhin ist es vorteilhaft, dass in der Schaltstellung, in der der Antriebsstrang eine wesentliche Verzögerung aufweist, eine Pahrdynamikregelung aktiv ist, die durch ein gezieltes Abbremsen oder Beschleunigen einzelner Räder des Fahrzeugs eine instabile Fahrsituation des Fahrzeugs verhindert.

Von besonderer Bedeutung ist die Realisierung des erfindungsgemäßen Verfahrens in der Form eines Steuerelements, das für ein Steuergerät einer adaptiven Abstands- bzw. Geschwindigkeitsregelung oder für ein Notbremssteuergerät eines Kraftfahrzeugs vorgesehen ist. Dabei ist auf dem Steuerelement ein Programm gespeichert, das auf einem Rechengerät, insbesondere auf einem Mikroprozessor oder Signalprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist Als Steuerelement kann insbesondere ein elektrisches Speichermedium zur Anwendung kommen, beispielsweise ein Read-Only-Memory.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung, sowie unabhängig von ihrer Formulierung bzw. Darstellung in der Beschreibung, bzw. in den Zeichnungen.

### Zeichnungen

Nachfolgend werden Ausführungsbeispiele der Erfindung anhand von Zeichnungen erläutert. Es zeigen:
- Figur 1: ein Blockschaltbild eine Ausführungsform der erfindungsgemäßen Vorrichtung,
- Figur 2: ein Ablaufdiagramm einer Ausführungsform des erfindungsgemäßen Verfahrens,
- Figur 3: ein weiteres Ablaufdiagramm einer weiteren Ausführungsform des erfindungsgemäßen Verfahrens und
- Figur 4: ein weiteres Ablaufdiagramm einer Ausführungsform des erfindungsgemäßen Verfahrens.

### Beschreibung von Ausführungsbeispielen

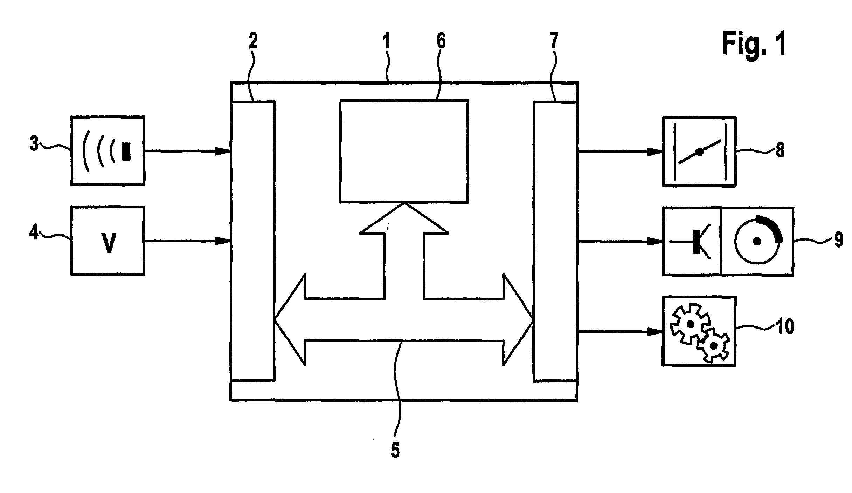

In Figur 1 ist ein Blockschaltbild dargestellt, das ein Notbremssteuergerät 1 aufweist. Dieses Notbremssteuergerät weist unter anderem eine Eingangsschaltung 2 auf, mittels der dem Notbremssteuergerät 1 Eingangssignale zuführbar sind. Als Eingangssignale werden der Eingangsschaltung 2 Signale einer Objektsensorik 3 zugeführt, die das Fahrzeugumfeld überwacht und beispielsweise den Abstand und die Relativgeschwindigkeit erkannter Objekte ermittelt sowie eventuell deren Azimutalwinkel zur Objektsensorik 3 feststellt Diese Objektsensorik kann beispielsweise als Radarsensor, als Lasersensor, als Ultraschallsensor, als Videosensor oder als Kombination aus diesen Sensorarten ausgeführt sein. Aus den mittels der Objektsensorik 3 bereitgestellten Daten berechnet das Notbremssteuergerät 1, ob ein Objekt im Fahrzeugumfeld vorhanden ist, das durch seinen Abstand, seine Relativgeschwindigkeit sowie seine Bewegungsrichtung, eine erhöhte Kollisionsgefahr mit dem eigenen Fahrzeug erzeugt. Weiterhin wird der Eingangsschaltung 2 das Signal V eines Geschwindigkeitssensors 4 zugeführt, das die Geschwindigkeit des eigenen Fahrzeugs darstellt. Mittels dieses Geschwindigkeitssignals des Geschwindigkeitssensors 4 ist es möglich, die Relativgeschwindigkeiten, die die Objektsensorik 3 zur Verfügung stellt, in Absolutgeschwindigkeiten umzurechnen. Weiterhin kann die Auslösung der Notbremsfunktion oder die Funktionalität der Notbremsfunktion anhand der eigenen Geschwindigkeit verändert werden, da beispielsweise bei hohen Geschwindigkeiten andere Notbremsarten zu bevorzugen sind, als bei niedrigen Geschwindigkeiten. Die der Eingangsschaltung 2 zugeführten Eingangssignale werden mittels einer Datenaustauscheinrichtung 5 an eine Berechnungseinrichtung 6 weitergeleitet, die beispielsweise als Mikroprozessor oder Signalprozessor ausgeführt sein kann. Diese Berechnungseinrichtung 6 ermittelt in Abhängigkeit der Eingangssignale Stellsignale für die nachgeordneten Stellelemente. In der Berechnungseinrichtung 6 wird aus den objektspezifischen Größen, die die Objektsensorik 3 zur Verfugung stellt, ermittelt, ob eine unausweichbare Kollision mit einem der erkannten Objekte vorliegt oder nicht. Wird eine derartige Kollisionssituation festgestellt, so werden Stellsignale entsprechend dem erfindungsgemäßen Verfahren erzeugt, um die Kollision zu vermeiden oder um mindestens die Kollisionsschwere zu verringern. Die von der Berechnungseinrichtung 6 erzeugten Stellsignale werden mittels der Datenaustauscheinrichtung 5 an eine Ausgangsschaltung 7 ausgegeben, die die Stellsignale an die nachgeordneten Einrichtungen weiterleitet. Als nachgeordnetes Stellelement ist beispielsweise ein Motorsteuergerät 8 vorgesehen, das beispielsweise eine elektrisch betätigbare Drosselklappe, eine Kraftstoffpumpe, eine Kraftstoffeinspritzeinrichtung, sowie eventuell die Zündungvorrichtungen beeinflussen kann. Weiterhin ist als nachgeordnetes Stellelement die Bremseinrichtung 9 des Fahrzeugs vorgesehen, die unabhängig von der Bremspedalbetätigung durch den Fahrer mittels einer Ansteuereinrichtung selbsttätig verzögern kann, wenn das Notbremssteuergerät 1 einen dementsprechenden Befehl ausgibt. Weiterhin ist ein Getriebe 10 vorgesehen, das unter anderem über eine Getriebesteuerung verfügt, mittels der die Übersetzungsstufen des Getriebes selbsttätig gewählt werden können. Das Getriebe kann hierbei beispielsweise ein elektrisch steuerbares Automatikgetriebe oder ein automatisiertes Schaltgetriebe sein, wobei es in beiden Fällen möglich ist, aus jedem beliebigen Gang, in jeden anderen beliebigen Gang zu schalten.

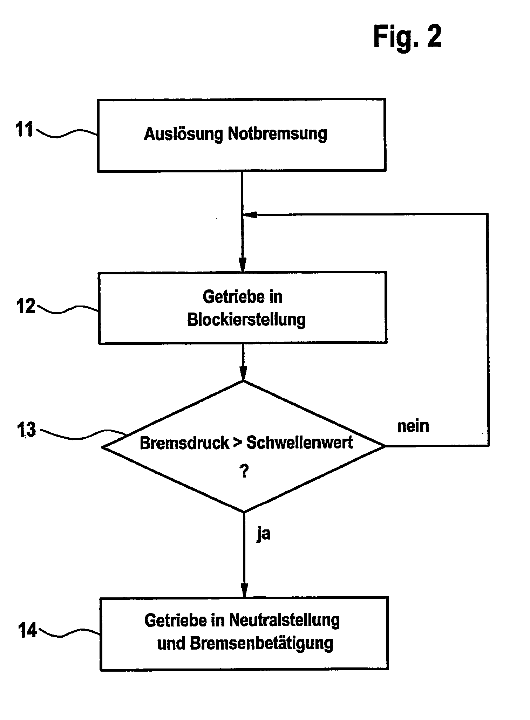

In Figur 2 ist ein Ablaufdiagramm dargestellt. Wird gemäß Schritt 11 erkannt, dass die Auslösung einer Notbremsung notwendig ist, da eine unausweichbare Kollisionssituation bevorsteht, so wird gemäß dem folgenden Schritt 12 das Getriebe 10 in Blockierstellung gebracht. Dies erfolgt beispielsweiese in dem mittels internen Reibkupplungen an Planetenradsätzen eine Stellung angesteuert wird, in der eine Blockierung des Planetengetriebes und der damit in Wirkverbindung stehenden Antriebsrädern ermöglicht wird. Gleichzeitig wird die Bremseinrichtung 9 angesteuert, wobei, bis der notwendige Bremsdruck erreicht ist, eine gewisse Zeit verstreichen kann. Während dieser Zeit wird die alleinige Verzögenmgswirkung durch das Getriebe in Blockierstellung gemäß Schritt 12 aufgebracht. In Schritt 13 wird geprüft, ob der Bremsdruck der Bremseinrichtung 9 einen Schwellenwert von beispielsweise 50 bar überschritten hat. Solange dieser Schwellenwert noch nicht überschritten ist, verzweigt Schritt 13 nach nein und das Verfahren verzweigt zu Schritt 12 zurück, indem das Getriebe in Blockierstellung gehalten wird. Wird gemäß Schritt 13 erkannt, dass der Bremsdruck der Bremseinrichtung 9 den Schwellenwert überschritten hat, so verzweigt das Ablaufdiagramm nach ja und es wird in Schritt 14 in Neutralstellung gebracht und die Fahrzeugsverzögerung durch die Bremsenbetätigung fortgeführt. Wird das Getriebe für Notbremszwecke in Blockierstellung gebracht, so ist es notwendig, dass in Block 12 eine Fahrdynamikregelung, wie beispielsweise ein elektronisches Stabilitätsprogramm zur Fahrspurstabilisierung des Fahrzeugs aktiviert wird, das durch gezieltes Abbremsen oder Beschleunigen einzelner Räder des Fahrzeugs ein Schleudern oder ein instabiles Fahrverhalten des Fahrzeugs verhindert.

Eine zweite Ausfuhrungsvanante sieht vor, dass das Ablaufdiagramm gemäß Figur 2 derart abgeändert wird, daß in Schritt 14 die Getriebeschaltung in Neutralstellung entfallt. In diesem Fall wird in Schritt 14 lediglich die Fahrzeugverzögerung durch zusätzliche Bremsenbetätigung vorgenommen, so dass nach Erreichen des Bremsdruckschwellenwertes nach Schritt 13, sowohl mit dem Getriebe in Blockierstellung, als auch mit den Bremseinrichtungen 9 des Fahrzeugs die Notbremsverzögerung aufgebracht wird.

Eine dritte Ausführungsvariante ändert das Ablaufdiagramm nach Figur 2 derart ab, dass sowohl Schritt 13, als auch Schritt 14 entfällt, so dass das Fahrzeug zur Durchführung der Notbremsung das Getriebe in Blockierstellung bringt und diese Blockierstellung bis zum Stillstand bzw. bis zur unvermeidbaren Kollision beibehalten wird, und die Fahrzeugverzögerung lediglich durch den Getriebeeingriff erfolgt. Die Bremseinrichtungen 9 bleiben in diesem Ausfühnmgsbeispiel deaktiviert.

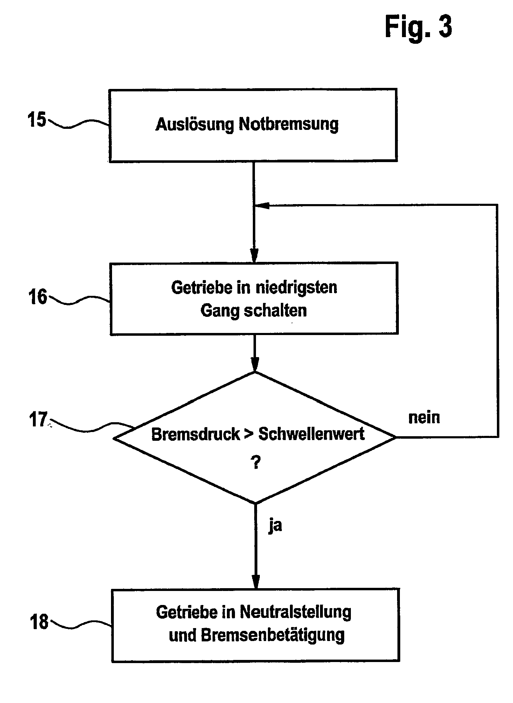

In Figur 3 ist ein weiteres Ablaufdiagramm dargestellt. Demgemäß wird nach der Auslösung der Notbremsfunktion in Schritt 15 das Getriebe gemäß Schritt 16 in den niedrigsten Gang geschaltet, um mittels der Bremswirkung des Motors sowie der erhöhten Reibung im Getriebe, das Fahrzeug zu verzögern. Alternativ ist es auch möglich, zusätzlich die Drosselklappe zu schließen, die Zündung abzuschalten, sowie eventuell die Kraftstoffzufuhr zu unterbrechen. Hierdurch kann eine schnellere Bremswirkung erreicht werden, als durch die Ansteuerung der Bremseinrichtungen 9, da für die Bremseinrichtungen 9 zuerst ein ausreichender Bremsdruck aufgebaut werden muss. Demgemäß wird in Schritt 17 geprüft, ob der momentane Bremsdruck ausreichend groß ist, das heißt ob der Bremsdruck einen Schwellenwert überschritten hat, der beispielsweise 50 bar betragen kann. Ist dies nicht der Fall so verzweigt Schritt 17 nach nein und das Verfahren wird in Schritt 16 fortgeführt, indem der niedrigste Gang des Getriebes beibehalten wird. Wird in Schritt 17 erkannt, dass der Bremsdruck größer als der Schwellenwert ist, so verzweigt Schritt 17 nach ja und es wird das Getriebe in Neutralstellung gebracht, sowie gleichzeitig die Bremseinrichtungen 9 zur Fahrzeugverzögerung angesteuert. Auch im Fall, das gemäß Schritt 16 das Getriebe in den niedrigsten Gang geschaltet wird, ist es notwendig, dass eine Fahrdynamikregelung aktiv ist, die das Fahrzeug während dem Verzögerungsvorgang spurstabil hält.

Gemäß einem fünften Ausführungsbeispiel ist es möglich, das Verfahren nach Figur 3 derart abzuändern, dass lediglich die Bremseinrichtungen 9 aktiviert werden, jedoch das Schalten des Getriebes in Neutralstellung entfällt. Hierdurch wird die Verzögerungswirkung des Fahrzeugs, sowohl durch das Getriebe, als auch durch die Bremseinrichtungen 9 bis in den Stillstand des Fahrzeugs bzw. bis zur unausweichbaren Kollision bereitgestellt.

Gemäß einer sechsten Ausführungsvariante ist es weiterhin möglich, das Verfahren nach Figur 3 derart abzuändern, dass nach dem Auslösen der Notbremsung nach Schritt 15 das Getriebe gemäß Schritt 16 in den niedrigsten Gang geschaltet wird und das Fahrzeug allein durch die Bremswirkung des Getriebes im niedrigsten Vorwärtsgang bis in den Stand bzw. bis zur Kollision verzögert wird, ohne daß die Bremseinrichtungen 9 angesteuert werden.

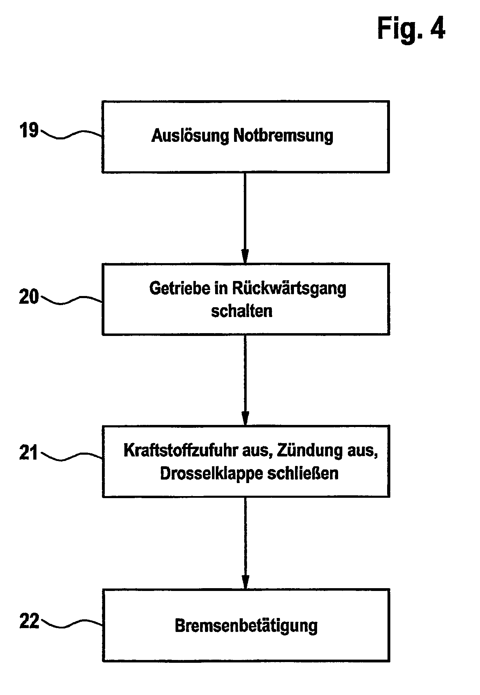

In Figur 4 ist ein weiteres Ablaufdiagramm dargestellt. Nachdem die Notbremsung gemäß Schritt 19 ausgelöst wurde, wird in Schritt 20 das Getriebe in den Rückwärtsgang geschaltet. Hierdurch wird der Motor des Fahrzeugs abgewürgt, so daß eine maximale Verzögerungswirkung entsteht. Weitergehend kann in Schritt 21 die Kraflstoffzufuhr zum Motor abgeschaltet werden, die Zündung deaktiviert werden, sowie eventuell die Drosselklappe geschlossen werden. Im darauffolgenden Schritt 22 werden die Bremseinrichtungen 9 des Fahrzeugs betätigt, um die Verzögerung zu maximieren. Alternativ ist es möglich, zwischen den Schritten 21 und 22 eine Abfrage vorzusehen, ob der Bremsdruck bereits ausreichend groß ist, d. h. über einem Schwellenwert liegt und bei einem niedrigeren Bremsdruck als dem Schwellenwert eine Nein-Verzweigung vorzusehen, die in Schritt 20 fortgeführt wird. Wird in diesem alternativ vorgesehenen Abfrageschritt erkannt, dass der Bremsdruck größer als ein Schwellenwert ist, so wird nach Schritt 22 verzweigt, indem die Bremseinrichtungen 9 des Fahrzeugs aktiviert werden. Auch im Fall, das gemäß Schritt 20 das Getriebe in den Rückwärtsgang geschaltet wird, ist es notwendig, dass eine Fahrdynamikregelung aktiv ist, die das Fahrzeug während dem Verzögerungsvorgang spurstabil hält.

Gemäß einer achten Ausführungsvariante ist es möglich, Schritt 22 wegzulassen, so dass die Verzögerungswirkung zur Notbremsung des Fahrzeugs lediglich durch das Schalten des Getriebes in den Rückwärtsgang und ein Abwürgen des Motors erreicht wird, wobei der Motor eventuell durch Schließen der Drosselklappe, Abschalten der Zündung und/oder Abschalten der Kraflstoffzufuhr deaktiviert wird. In diesem Fall wird die Verzögerungswirkung des Fahrzeugs zur Notbremsung lediglich aus dem Getriebeeingriff erreicht, ohne Ansteuerung der Bremseinrichtungen 9.

Weiterhin ist es möglich, bei Erkennen einer bevorstehenden unausweichbaren Kollision mit einer ersten der beschriebenen Ausführungsvarianten, eine Abbremsung des Fahrzeugs zu beginnen und während dem Verzögerungsvorgang die Verzögerung mit einer weiteren Ausführungsvariante fortzuführen, da die Ausführungsvarianten beispielsweise bei unterschiedlichen Geschwindigkeiten, unterschiedliche Effektivitäten aufweisen. Auch ist es möglich in Abhängigkeit der Fahrzeuggeschwindigkeit zum Auslösezeitpunkt der Notbremsfunktion 11, 15, 19 unterschiedliche Ausführungsvarianten zur Notbremsung zu aktivieren, je nachdem welche der beschriebenen Varianten im vorliegenden Fall einen stärkten Energieabbau ermöglicht.

Bei den beschriebenen Verfahren ist es möglich, dass Teile des Antriebsstrangs, bzw. des Getriebes zerstört oder beschädigt werden. Da die beschriebene Notbremsfunktion nur ausgelöst wird, wenn erkannt wird, dass eine unausweichbare Kollision bevorsteht, also mit einem Sachschaden oder gar einem Personenschaden gerechnet werden muss, wird die Beschädigung oder Zerstörung von Teilen des Antriebsstrangs bewußt in Kauf genommen, da hierdurch eventuelle die Kollisionsschwere vermindert werden kann.

## Patentansprüche

1. Verfahren zur Verzögerung eines Fahrzeugs, das mittels einer Objektsensorik (3) im Umfeld des Fahrzeugs befindliche. Objekte detektiert und das bei Erkennen einer unausweichbaren Kollisionssituation mit einem der erkannten Objekte eine Notbremsung (11,15,19) zur Kollisionsverhinderung bzw. Kollisionsstärkenverminderung auslöst, wobei das Getriebe (10) zu Beginn der Notbremsung in eine Schaltstellung gebracht wird, in der der Antriebsstrang eine wesentliche Verzögerungswirkung aufweist, **dadurch gekennzeichnet, dass** die Schaltstellung, in der der Antriebsstrang eine wesentliche Verzögerung aufweist, eine Blockierstellung des Getriebes (10) ist und das Getriebe (10) solange in der Schaltstellung mit wesentlicher Verzögerungswirkung verbleibt, bis ein maximaler Bremsdruck an den Bremseinrichtungen (9) aufgebaut ist und das Getriebe (10) dann in eine neutrale Schaltstellung geschaltet wird.

2. Verfahren nach Anspruch 1, **dadurch gekennzeichnet, dass** die Blockierstellung des Getriebes (10) durch eine Ansteuerung mindestens einer internen Reibkupplung an mindestens einem Planetenradsatz eingestellt werden kann.

3. Verfahren nach einem der vorhergehenden Ansprüche, **dadurch gekennzeichnet, dass** zusätzlich zur Verzögerung des Antriebsstranges die Fahrzeugbremsen (9) aktiviert werden.

4. Verfahren nach einem der vorhergehenden Ansprüche, **dadurch gekennzeichnet, dass** in der Schaltstellung, in der der Antriebsstrang eine wesentliche Verzögerung aufweist, eine Fahrdynamikregelung aktiv ist.

5. Vorrichtung zur Verzögerung eines Fahrzeugs, wobei mittels einer Objektsensorik (3) im Umfeld des Fahrzeugs befindliche Objekte detektierbar sind und bei Erkennen einer unausweichbaren Kollisionssituation mit einem der erkannten Objekte eine Notbremsung (11,15,19) zur Kollisionsverhinderung bzw. Kollisionsstärkenverminderung auslösbar ist, wobei Steuermittel (1) vorgesehen sind, die zur Übermittlung eines Bremsauslösesignal (11,15,19) an ein Getriebeschaltmittel (10) vorgesehen sind, wodurch zu Beginn der Notbremsung das Getriebe (10) mittels der Schaltmittel in eine Schaltstellung bringbar ist, in der der Antriebsstrang eine wesentliche Verzögerungswirkung aufweist **dadurch gekennzeichnet, dass** die Schaltstellung, in der der Antriebsstrang eine wesentliche Verzögerung aufweist, eine Blockierstellung des Getriebes (10) ist und das, Getriebe (10) solange in der Schaltstellung mit wesentlicher Verzögerungswirkung verbleibt, bis ein maximaler Bremsdruck an den Bremseinrichtungen (9) aufgebaut ist und das Getriebe (10) dann in eine neutrale Schaltstellung geschaltet wird.

## Claims

1. Method for decelerating a vehicle, which method detects objects which are situated in the vicinity of the vehicle by means of an object sensor system (3) and, if an unavoidable collision situation with one of the detected objects is detected, triggers an emergency braking operation (11, 15, 19) in order to prevent the collision or in order to reduce the severity of the collision, the transmission (10) being shifted at the beginning of the emergency braking operation into a selector position, in which the drive train has a substantial decelerative effect, **characterized in that** the selector position, in which the drive train has a substantial decelerative effect, is a locking position of the transmission (10) and the transmission (10) remains in the selector position with a substantial decelerative effect until a maximum brake pressure is built up at the brake devices (9) and the transmission (10) is then shifted into a neutral selector position.

2. Method according to Claim 1, **characterized in that** the locking position of the transmission (10) can be set by an actuation of at least one internal friction clutch on at least one planetary gear set.

3. Method according to one of the preceding claims, **characterized in that**, in addition to the deceleration of the drive train, the vehicle brakes (9) are activated.

4. Method according to one of the preceding claims, **characterized in that** a driving dynamics regulation system is active in the selector position, in which the drive train has a substantial decelerative effect.

5. Apparatus for decelerating a vehicle, it being possible for objects which are situated in the vicinity of the vehicle to be detected by means of an object sensor system (3) and, if an unavoidable collision situation with one of the detected objects is detected, it being possible for an emergency braking operation (11, 15, 19) to be triggered in order to prevent the collision or in order to reduce the severity of the collision, control means (1) being provided which are provided for transmitting a brake triggering signal (11, 15, 19) to a transmission shift means (10), as a result of which, at the beginning of the emergency braking operation, the transmission (10) can be shifted by means of the shift means into a selector position, in which the drive train has a substantial decelerative effect, **characterized in that** the selector position, in which the drive train has a substantial decelerative effect, is a locking position of the transmission (10) and the transmission (10) remains in the selector position with a substantial decelerative effect until a maximum brake pressure is built up at the brake devices (9) and the transmission (10) is then shifted into a neutral selector position.

## Revendications

1. Procédé pour décélérer un véhicule, qui détecte des objets se trouvant dans les environs du véhicule au moyen d'un système de capteurs d'objets (3) et qui, en cas de détection d'une situation de collision inévitable avec l'un des objets détectés, déclenche un freinage d'urgence (11, 15, 19) pour éviter la collision ou pour en réduire l'intensité, la boîte de vitesses (10), au début du freinage d'urgence, étant amenée dans une position de changement de vitesse dans laquelle la transmission présente un effet sensible de décélération, **caractérisé en ce que** la position de changement de vitesse dans laquelle la transmission présente une décélération sensible, est une position de blocage de la boîte de vitesses (10) et la boîte de vitesses (10) reste dans la position de changement de vitesse avec un effet sensible de décélération tant qu'une pression de freinage maximale au niveau des systèmes de freinage (9) n'a pas été atteinte, et la boîte de vitesses (10) est alors commutée dans une position de changement de vitesse neutre.

2. Procédé selon la revendication 1, **caractérisé en ce que** la position de blocage de la boîte de vitesses (10) peut être ajustée par une commande d'au moins un embrayage à friction interne au niveau d'au moins un train planétaire.

3. Procédé selon l'une quelconque des revendications précédentes, **caractérisé en ce qu'**en plus du ralentissement de la transmission, les freins du véhicule (9) sont activés.

4. Procédé selon l'une quelconque des revendications précédentes, **caractérisé en ce que** dans la position de changement de vitesse, dans laquelle la transmission présente une décélération sensible, une régulation de la dynamique de conduite est activée.

5. Dispositif pour décélérer un véhicule, dans lequel on peut détecter des objets se trouvant dans les environs du véhicule au moyen d'un système de capteurs d'objets (3), et dans lequel, en cas de détection d'une situation de collision inévitable avec l'un des objets détectés, un freinage d'urgence (11, 15, 19) peut être déclenché pour éviter la collision ou pour en réduire l'intensité, des moyens de commande (1) étant prévus, lesquels sont prévus pour transmettre un signal de déclenchement des freins (11, 15, 19) à un moyen de changement de vitesse de la boîte de vitesses (10), de sorte qu'au début du freinage d'urgence, la boîte de vitesses (10) puisse être amenée au moyen des moyens de changement de vitesse dans une position de changement de vitesse dans laquelle la transmission présente un effet de décélération sensible, **caractérisé en ce que** la position de changement de vitesse dans laquelle la transmission présente une décélération sensible, est une position de blocage de la boîte de vitesses (10) et la boîte de vitesses (10) reste dans la position de changement de vitesse avec un effet sensible de décélération tant qu'une pression de freinage maximale au niveau des systèmes de freinage (9) n'a pas été atteinte, et la boîte de vitesses (10) est alors commutée dans une position de changement de vitesse neutre.
